# EUROPÄISCHE PATENTSCHRIFT

(11) **EP 3 490 872 B1**
(45) Veröffentlichungstag und Bekanntmachung des Hinweises auf die Patenterteilung: **10.06.2020**
(21) Anmeldenummer: 18701691.0
(22) Anmeldetag: 17.01.2018
(51) Int. Cl.: B62B 5/06, B62B 3/14

(54) **GRIFFEINHEIT**
HANDLE UNIT
DISPOSITIF DE POIGNÉE

(30) Priorität: 07.06.2017 DE 102017112494
(43) Veröffentlichungstag der Anmeldung: 05.06.2019
(73) Patentinhaber: Wanzl GmbH & Co. KGaA, 89340 Leipheim (DE)
(72) Erfinder: STÖCKLE, Dieter, 89361 Landensberg (DE)
(86) Internationale Anmeldenummer: PCT/EP2018/051069
(87) Internationale Veröffentlichungsnummer: WO 2018/224188

(56) Entgegenhaltungen:
- WO-A2-03/059715
- DE-U1- 29 812 462
- US-A1- 2007 024 029

## Beschreibung

Die vorliegende Erfindung betrifft eine Greifeinheit für eine Schiebegriffeinheit eines von Hand beweglichen Transportwagens, wobei die Greifeinheit jeweils wenigstens aus einer Greifeinheitaufnahme und einem Greifeinheiteinsatz besteht, die gemeinsam im montierten Zustand ein freistehend aufragendes Griffhorn für die Schiebegriffeinheit ausbilden. Ferner betrifft die vorliegende Erfindung einen Transportwagen mit einer solchen Greifeinheit.

Transportwagen für schwere und sperrige Güter, wie sie beispielsweise in einem Bau- oder Großmarkt zu finden sind, werden häufig mit aufragenden Griffen versehen. Diese erlauben es, eine natürlichere bzw. ergonomischere Handhaltung beim Bewegen des schwerbeladenen Transportwagens einzunehmen.

Des Weiteren finden aufragende Griffe für eine ergonomischere Handhaltung auch bereits bei Transportwagen in Einzelhandelsgeschäften Anwendung, die üblicherweise an den Enden einer sich horizontal erstreckenden Querstange angeordnet sind.

Aus der WO 2012/042033 A1 ist bereits ein Schiebegriff für einen Transportwagen bekannt, der neben einer quer bzw. horizontal verlaufenden Querstange auch aufragende Griffteile zu beiden Enden des Schiebegriffs aufweist, wobei diese Griffteile drehbar um eine Befestigungsachse gelagert sind und auch in einer Position fixiert werden können.

Aus der EP 0 985 200 B1 ist bereits ein Handgriff mit einem Mittelstück und mit zwei an den Enden des Mittelstücks befestigbaren Endstücken bekannt, wobei die Endstücke eine Befestigungseinrichtung zur Befestigung an einem Transportwagen, wie einem Einkaufswagen, aufweisen.

Weiterhin ist aus der US 2007/0024029 A1 ein Transportwagen bekannt, der in Form eines Kinderwagens ausgeführt ist. Dieser weist zwei Greifeinheiten auf, die als Schiebegriffeinheit dienen. Jede Greifeinheit besteht hierbei aus einer Greifeinheitaufnahme und einem Greifeinheiteinsatz. Beide Teile können gemeinsam im montierten Zustand ein freistehend aufragendes, so genanntes Griffhorn ausbilden. Für die Befestigung am Kinderwagen ist eine Befestigungsvorrichtung vorgesehen. Die Greifeinheitaufnahme und der Greifeinheiteinsatz sind im montierten Zustand mittels einer Nut-Feder-Verbindung verbunden.

Aufgrund der erhöhten einwirkenden Kräfte, die durch die aufragenden Griffteile entstehen, kann es bei den im Stand der Technik genannten Schiebegriffeinheiten insbesondere bei unsachgemäßem Gebrauch zu Schädigungen kommen.

Wünschenswert wäre es daher, eine Schiebegriffeinheit für Transportwagen dahingehend weiterzubilden, dass die durch den Nutzer verursachte Kraft- und Momenteneinleitung der aufragenden Griffteile in die Schiebegriffeinheit einerseits optimiert wird und andererseits der Benutzer seine Handhaltung variieren kann und sowohl eine vertikale als auch horizontale Griffmöglichkeit vorgesehen ist.

Es ist die Aufgabe der vorliegenden Erfindung, eine Greifeinheit für einen Transportwagen der eingangs genannten Art in vorteilhafter Weise weiterzubilden, insbesondere dahingehend, dass die Greifeinheit einfacher aufgebaut und leichter montiert werden kann und dass die vertikale Griffmöglichkeit einer Schiebegriffeinheit verbessert werden kann. Die Aufgabe besteht ferner darin, einen verbesserten Transportwagen mit einer Greifeinheit bereitzustellen.

Diese Aufgabe wird erfindungsgemäß gelöst durch eine Greifeinheit mit den Merkmalen des Anspruchs 1. Danach ist vorgesehen, dass eine Greifeinheit für eine Schiebegriffeinheit eines von Hand beweglichen Transportwagens bereitgestellt wird, wobei die Greifeinheit jeweils wenigstens aus einer Greifeinheitaufnahme und einem Greifeinheiteinsatz besteht, die gemeinsam im montierten Zustand ein freistehend aufragendes Griffhorn für die Schiebegriffeinheit ausbilden, und wobei jeweils an eine Greifeinheitaufnahme eine Befestigungseinrichtung angeformt ist, die zur Befestigung an dem Transportwagen dient, wobei die Greifeinheitaufnahme und der Greifeinheiteinsatz mittels wenigstens einer Nut-Feder-Verbindung miteinander im montierten Zustand verbunden sind.

Die Greifeinheitaufnahme und/oder der Greifeinheiteinsatz ist zumindest abschnittsweise doppelwandig ausgebildet.

Weiterhin bildet die Greifeinheitaufnahme und/oder der Greifeinheiteinsatz mit ihrer/seiner doppelwandigen Ausbildung einen offenen Ringspalt aus, in den im montierten Zustand eine Wandung der Greifeinheitaufnahme oder des Greifeinheiteinsatzes eingesetzt ist.

Zudem ist der Ringspalt durch eine innenliegende Wandung und eine außenliegende Wandung begrenzt, wobei die innenliegende Wandung gemessen vom Grund des Ringspaltes länger ist im Vergleich zur außenliegenden Wandung.

Die Erfindung basiert auf dem Grundgedanken, dass die Greifeinheit mehrteilig ausgebildet ist und aus wenigstens zwei Komponenten, nämlich der Greifeinheitaufnahme und dem Greifeinheiteinsatz, besteht. Die Verbindung dieser wenigstens zwei Komponenten wird dann durch eine einfache Steckverbindung realisiert. Um die Steckverbindung stabil und langlebig auszugestalten, ist sie wenigstens durch eine Nut-Feder-Verbindung ausgebildet. Durch eine FormschlussVerbindung wird eine einfache und zuverlässige Verbindung zwischen der Greifeinheitaufnahme und dem Greifeinheiteinsatz realisiert. Auch Relativbewegungen zwischen der Greifeinheitaufnahme und dem Greifeinheiteinsatz werden minimiert bzw. nahezu verhindert, so dass ggf. sogar auf zusätzliche Verbindungsmittel wie Klebstoffe oder dergleichen verzichtet werden kann. Die zweiteilige bzw. mehrteilige Ausgestaltung der Greifeinheit ermöglicht eine freiere und verbesserte Gestaltungsmöglichkeit hinsichtlich der Form insbesondere des Greifeinheiteinsatzes, der im montierten Zustand den oberen Teil des Griffhornes bildet. So kann leichter eine ergonomische Formgebung realisiert werden, die ggf. mehrere Hinterschnitte oder sonstige Freiformflächen erfordert und somit entsprechende Herausforderungen an den Herstellungsprozess stellt. Durch die Aufteilung in Greifeinheitaufnahme und Greifeinheiteinsatz wird die Komplexität in der Herstellung deutlich reduziert. Eine Herstellung z.B. mittels Kunststoffspritzgussgießen wird ermöglicht.

Durch die doppelwandige Ausbildung ergeben sich weitere Möglichkeiten eines Formschlusses durch Ineinanderstecken von Greifeinheitaufnahme und Greifeinheiteinsatz. Hier ist denkbar, dass eine Komponente teilweise doppelwandig ausgebildet ist und die andere Komponente nicht, d.h. im Einsteckbereich nur einwandig. Dann kann die im Einsteckbereich einwandige Komponente in die teilweise doppelwandig ausgebildete Komponente einfach und definiert eingesteckt werden. Durch die Ausbildung des Ringspalts wird eine definierte Einsteckmöglichkeit für die andere Komponente, also entweder für die Greifeinheitaufnahme oder den Greifeinheiteinsatz, gebildet.

Die Nut-Feder-Verbindung kann im Ringspalt angeordnet und ausgebildet sein.

Denkbar ist, dass nur eine Komponente doppelwandig und mit Ringspalt ausgebildet ist, während die andere Komponente einwandig im Einsteckbereich, der im Ringspalt aufgenommen wird, ausgebildet ist.

Durch die Abmessungen der innenliegenden Wandung, die somit die Höhe der außenliegenden Wandung überragt, wird eine Stabilisierung erreicht. Die innenliegende Wandung kann so als zusätzliche Abstützung und Fixierung im montierten Zustand dienen. Ferner dient sie als Führungselement während der Montage der Greifeinheit.

Des Weiteren kann vorgesehen sein, dass wenigstens eine Feder der Nut-Feder-Verbindung durch einen Wulst und/oder eine Erhebung aus einer Oberfläche der Greifeinheitaufnahme und/oder des Greifeinheiteinsatzes ausgebildet ist. Dieser Wulst kann auch durch Herstellung im Spritzgussverfahren erzeugt werden, z.B. durch entsprechende Strukturierung des Spritzgusswerkzeugs und mittels Zwangsentformung aus dem Werkzeug. Der Wulst bzw. die Erhebung kann einteilig bzw. (werkstoff-)einstückig aus der Oberfläche der Greifeinheitaufnahme und/oder des Greifeinheiteinsatzes ausgebildet sein. Eine einfache und kostengünstige Herstellung wird so ermöglicht. Außerdem kann so erreicht werden, dass die Nut-Feder-Verbindung stabil und langlebig ausgestaltet wird.

Außerdem kann wenigstens eine Nut der Nut-Feder-Verbindung durch eine Vertiefung und/oder eine Nut in der Oberfläche der Greifeinheitaufnahme und/oder des Greifeinheiteinsatzes ausgebildet sein. Auch hier kann eine Herstellung im Spritzgussverfahren erfolgen, z.B. durch entsprechende Strukturierung des Spritzgusswerkzeugs und mittels Zwangsentformung aus dem Werkzeug. Eine derartige Oberflächenstrukturierung ist einfach zu erzeugen und ermöglicht zugleich einen guten Formschluss für die Nut-Feder-Verbindung.

Die Feder und/oder die Nut kann/bzw. können im Wesentlichen ringförmig ausgebildet sein. Dadurch ergibt sich eine verbesserte Formschlusswirkung. Insbesondere ist denkbar, dass ein umlaufender Federring vorhanden ist, der in eine umlaufend ringförmige Nut eingreift. Grundsätzlich ist weiter denkbar, dass die ringförmige Nut-/Federgestaltung auch umlaufend segmentartig oder mit Unterbrechungen ausgebildet ist. Dies erlaubt eine gleichmäßige Belastung an der Formschlussstelle bzw. in dem Bereich, in dem der Formschluss bzw. Ringschluss realisiert ist. Eine verbesserte Verbindung und ein verbesserter Halt werden dadurch möglich.

Die Greifeinheitaufnahme und/oder der Greifeinheiteinsatz können im Wesentlichen kelchartig ausgebildet sein. Dadurch wird eine einfachere Verbindung von Greifeinheitaufnahme und Greifeinheiteinsatz erreicht. So ist denkbar, ein Element in das andere hinein zu schieben oder die beiden kelchartigen Komponenten aufeinander zustecken.

Außerdem kann vorgesehen sein, dass die Greifeinheitaufnahme und der Greifeinheiteinsatz jeweils ein Steckelement aufweisen, die im montierten Zustand der Greifeinheit im Inneren der Greifeinheit befindlich sind und ineinandergreifen. Diese Steckelemente bzw. die komplementären Steckelemente können mittig in der Greifeinheit angeordnet sein. Hierdurch wird zusätzliche Stabilität erreicht und eine zusätzliche Steckverbindung realisiert.

Insbesondere können die Steckelemente nach dem Schlüssel-Schloss-Prinzip ineinandergreifen. Dadurch wird eine einfache und sichere Montage geschaffen.

Des Weiteren ist denkbar, dass eines der Steckelemente kreuzartig bezogen auf seinen Querschnitt, insbesondere doppelkreuzartig bezogen auf seinen Querschnitt, ausgebildet ist. Durch den kreuzartigen Querschnitt wird die Stabilität und auch die Steifigkeit erhöht. Außerdem wird insbesondere verhindert, dass es zu einem Knicken kommen kann. Die kreuzartige Ausgestaltung ermöglicht auch einen sicheren Halt in einem komplementär ausgestalteten Gegenstück.

Grundsätzlich denkbar ist aber auch, dass statt eines kreuzartigen Querschnitts ein anderer geeigneter Querschnitt gewählt wird, nämlich insbesondere, dass eines der Steckelemente mit einem knicksteifen Querschnitt ausgebildet ist. Dies kann beispielsweise durch Formgebungen mit Rippen und/oder Kanten oder dergleichen erreicht werden. Auch konvexe und konkave Formen können zur Stabilitätserhöhung genutzt werden.

Weiter kann vorgesehen sein, dass die Nut-Feder-Verbindung mehrere Nuten mit unterschiedlicher Tiefe aufweist. Durch eine spezielle Form der Nut-Feder-Geometrien können geringe Montagekräfte aber dementsprechend hohe Demontagekräfte (Abzugskräfte) realisiert werden. Die ringförmigen Nuten können hierzu in Montagerichtung des Griffhorns unterschiedlich tief geformt sein. Dies wird beispielsweise durch einen umlaufenden keilartigen Zuführbereich erreicht, welcher den Hinterschnitt erhöht. Durch diesen wird die Montage erleichtert und die Demontage erschwert.

Die Aufgabe wird erfindungsgemäß weiterhin gelöst durch einen Transportwagen mit einer Greifeinheit mit den Merkmalen des Anspruchs 10.

Weitere Einzelheiten und Vorteile der Erfindung sollen nun anhand eines in den Zeichnungen näher dargestellten Ausführungsbeispiels erläutert werden.

Es zeigen:
- Fig. 1: eine perspektivische Ansicht auf den grundsätzlichen Aufbau einer Schiebegriffeinheit mit erfindungsgemäßer Greifeinheit;
- Fig. 2: eine perspektivische Darstellung auf einen Einkaufswagen mit der Schiebegriffeinheit gemäß Fig. 1;
- Fig. 3: eine perspektivische Ansicht auf ein weiteres Ausführungsbeispiel einer Schiebegriffeinheit mit erfindungsgemäßer Greifeinheit;
- Fig. 4: eine perspektivische Ansicht auf eine montierte erfindungsgemäße Greifeinheit;
- Fig. 5: eine Explosionsdarstellung der Greifeinheit gemäß Fig. 4;
- Fig. 6: eine isolierte Ansicht der Greifeinheitaufnahme der Greifeinheit gemäß Fig. 4;
- Fig. 7: eine isolierte Ansicht des Greifeinheiteinsatzes der Greifeinheit gemäß Fig. 4;
- Fig. 8: eine Teil-Schnittdarstellung der Greifeinheit gemäß Fig. 4;
- Fig. 8a: eine Detaildarstellung des Details A aus Fig. 8; und
- Fig. 9: eine weitere Detaildarstellung eines Details A aus Fig. 8.

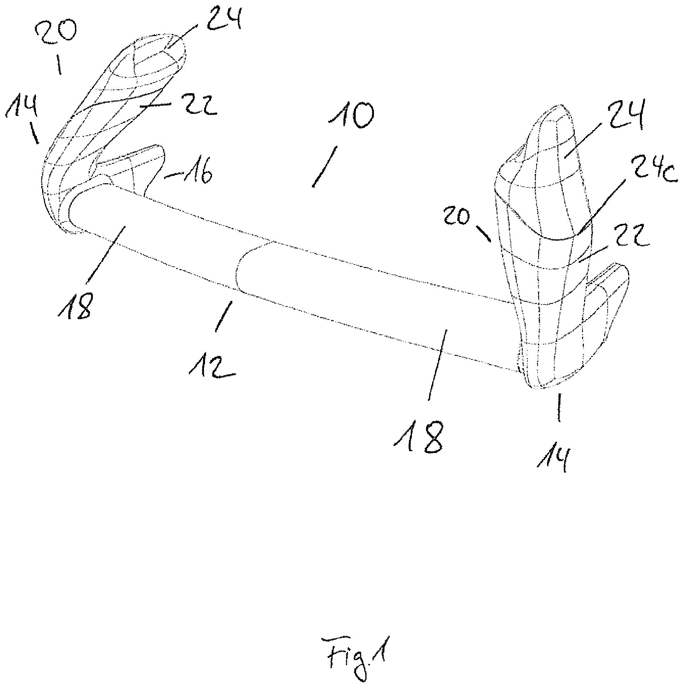

Fig. 1 zeigt in perspektivischer Darstellung ein Ausführungsbeispiel einer erfindungsgemäßen Greifeinheit 20 für eine Schiebegriffeinheit 10.

Die Schiebegriffeinheit 10 weist eine Querstrebe 12 auf, die hier als Querstange ausgeführt ist.

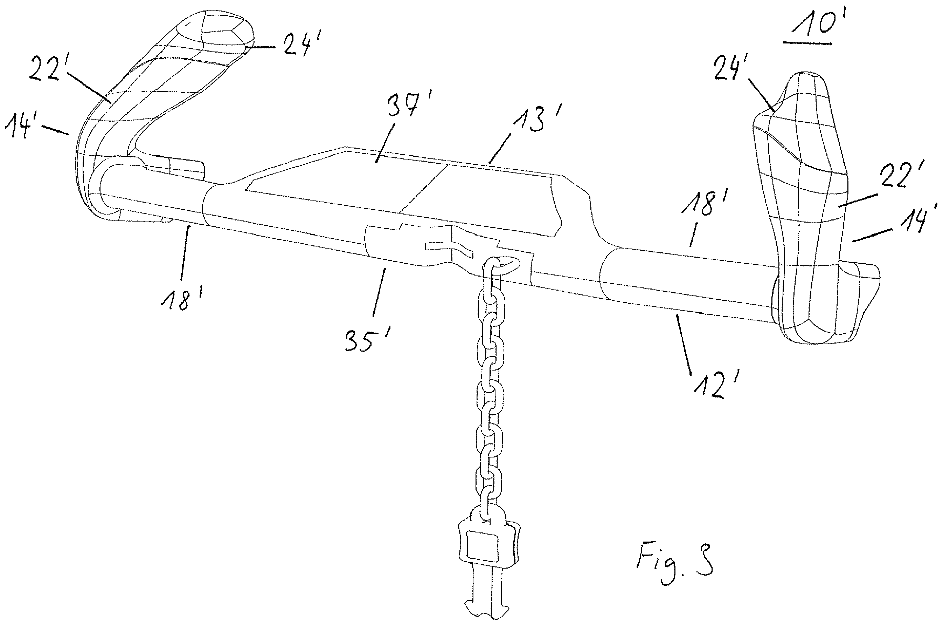

Die Querstrebe 12 kann aber auch ein Mittelstück 13' und zwei durch das Mittelstück 13' voneinander getrennte Griffabschnitte 18' aufweisen (siehe Fig. 3).

Die Querstrebe 12 kann aber auch ein Münzpfandsystem aufweisen, wie dies beispielsweise in der EP 0 985 200 B1 offenbart ist.

Im montierten Zustand, wie in Fig. 1 gezeigt, weist die Schiebegriffeinheit 10 weiter an den beiden Enden der Querstrebe 12 jeweils ein Endstück 14 auf, die spiegelverkehrt zueinander identisch aufgebaut sind.

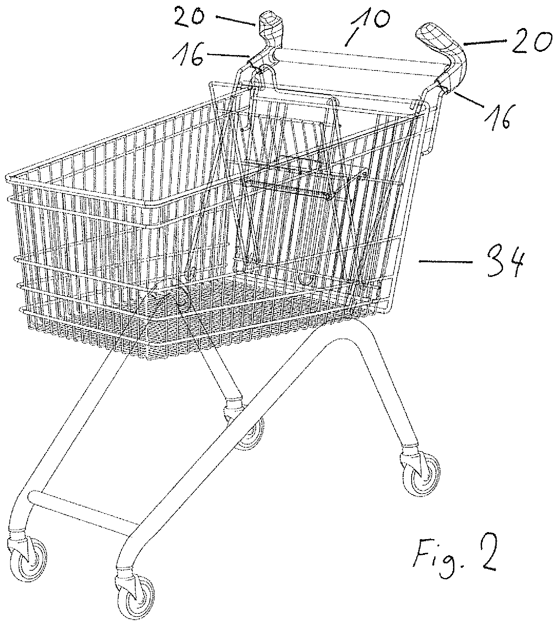

Die Endstücke 14 weisen eine Befestigungseinrichtung 16 zum Befestigen der Endstücke 14 an einem von Hand beweglichen Transportwagen 34 (vgl. Fig. 2) auf.

Bei einem derartigen Transportwagen 34 kann es sich um einen Einkaufswagen oder Transportwagen für Baumärkte handeln.

Im Bereich der beiden Enden der Querstrebe 12 sind jeweils zwei Griffabschnitte 18 vorgesehen, die im normalen Schiebebetrieb des Transportwagens 34 die reguläre Griffposition einer den Transportwagen 34 schiebenden Person darstellen.

Wie in Fig. 3 ersichtlich, sind zwei durch einen Abschnitt des Mittelstücks 13' getrennte Griffabschnitte 18' vorgesehen.

Die Schiebegriffeinheit 10 weist an den beiden Endstücken 14 jeweils freistehende, aufragende erfindungsgemäße Greifeinheiten 20 auf.

Jede Greifeinheit 20 ist dabei wenigstens aus einer Greifeinheitaufnahme 22 und einem Greifeinheiteinsatz 24 ausgebildet.

Zwischen der Greifeinheitaufnahme 22 und dem Greifeinheiteinsatz 24 befindet sich im montierten Zustand an deren gegenseitiger Kontaktfläche eine äußere radial umlaufende Trennfuge 24c.

Greifeinheitaufnahme 22 und Greifeinheiteinsatz 24 bilden jeweils gemeinsam im montierten Zustand ein freistehend aufragendes Griffhorn 26 für die Schiebegriffeinheit 10 aus.

An eine Greifeinheitaufnahme 22 ist jeweils eine Befestigungseinrichtung 16 angeformt, die zur Befestigung der Endstücke 14 an dem Transportwagen 34 dient.

Die Befestigungseinrichtung 16 und die Greifeinheitaufnahme 22 sind dabei im gezeigten Ausführungsbeispiel einstückig ausgebildet.

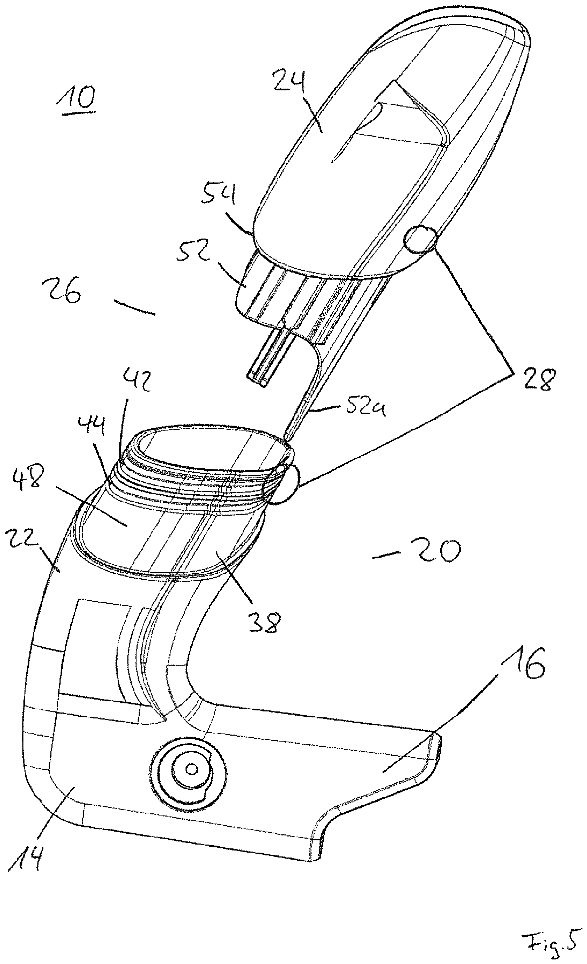

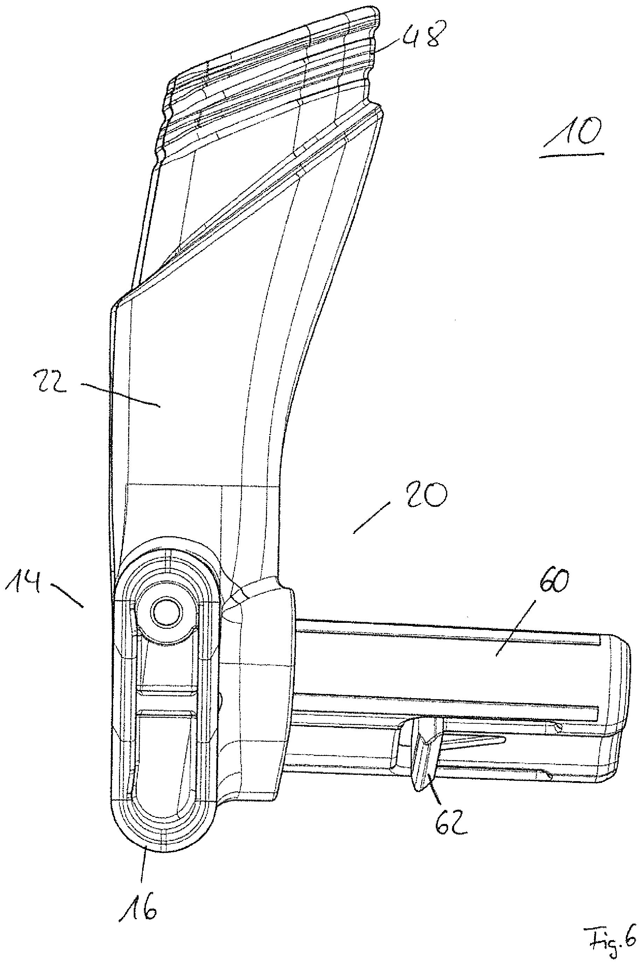

Weitere Details sind aus Fig. 5 und 6 ersichtlich.

Die Greifeinheitaufnahme 22 ist dabei kelchartig ausgebildet.

Der Greifeinheiteinsatz 24 wird dabei in die kelchartig ausgebildete Greifeinheitaufnahme 22 eingesetzt bzw. durch die Nut-Feder-Verbindung 28 in ihr verrastet.

Die Greifeinheitaufnahme 22 und der Greifeinheiteinsatz 24 greifen im montierten Zustand zumindest teilweise formschlüssig ineinander ein.

Die Endstücke 14 sind dabei aus Kunststoff, hier Polyamid, nämlich PA6 GF15 ausgebildet. Grundsätzlich denkbar wären auch Ausführungen aus Polypropylen (PP) oder vergleichbare Thermoplaste. Auch faserverstärkte Kunststoffe kommen grundsätzlich in Betracht und sind geeignet.

Die Greifeinheitaufnahme 22 und der Greifeinheiteinsatz 24 können aus identischen Materialien aufgebaut sein.

Dies ist jedoch nicht zwingend erforderlich, denkbar ist auch, dass die Greifeinheitaufnahme 22 und der Greifeinheiteinsatz 24, wie hier gezeigt, zumindest teilweise aus unterschiedlichen Materialien ausgebildet sind.

So ist hier vorgesehen, dass die Greifeinheitaufnahme 22 ebenso wie das Endstück 14 aus Kunststoff ausgebildet sind, während der Greifeinheiteinsatz 24 teilweise aus einem Gummimaterial ausgebildet ist, um bessere Greifeigenschaften zu ermöglichen.

Die Formgebung der Greifeinheiten 20 ist insgesamt dergestalt, dass diese eine Griffmöglichkeit bieten, die an die Hände des Nutzers einer Schiebegriffeinheit 10 ergonomisch angepasst sind.

Denkbar sind auch Mulden für Finger, Ablageflächen, Einsenkungen für den Daumen und entsprechende Ausbuchtungen, die an die Handform des Benutzers angepasst sind.

So ist insbesondere denkbar, dass eine gesonderte Auflagefläche für den Handteller mit einer Ausbuchtung vorgesehen ist, die dann direkt auf der Handtellerinnenseite entsprechend aufliegen kann.

Insgesamt ist die Greifeinheit 20 so ergonomisch angepasst, wobei die Gestaltung derart gewählt ist, dass sie sowohl für kleine als auch für große Hände passend ist und hierzu Höhe und Querschnitt entsprechend angepasst sind.

Durch eine verbesserte Auflage der Hand und eine entsprechende ergonomische Ausgestaltung wird es auch möglich, einfacher Kräfte in die Greifeinheit 20 einleiten zu können.

Durch die verbesserte Auflagemöglichkeit der Hand auf der Greifeinheit 20 wird es dem Benutzer erleichtert, auch einen schweren Einkaufswagen oder Transportwagen bewegen zu können.

Fig. 2 zeigt in perspektivischer Darstellung die Schiebegriffeinheit 10 im montierten Zustand an einem Einkaufswagen 34.

Die Befestigungseinrichtung 16 zum Befestigen an dem von Hand beweglichen Transportwagen 34 ist derart ausgebildet, dass sie auf einen entsprechenden Ansatz eines Transportwagens 34 aufgesetzt werden kann.

Dort kann entweder lediglich eine formschlüssige Befestigung oder eine formschlüssige Befestigung mit zusätzlicher Bolzenbefestigung, Vernietung oder Verschraubung vorgesehen sein.

Grundsätzlich ist denkbar, dass die Befestigungseinrichtung 16 auf einem Teil eines Korbes oder eines Trägers des Fahrgestells des Transportwagens 34 aufgesetzt wird.

Fig. 3 zeigt in perspektivischer Ansicht ein weiteres Ausführungsbeispiel einer Schiebegriffeinheit 10', die alternativ an dem in Fig. 2 gezeigten Einkaufswagen 34 montiert werden kann.

Hier weist die Querstrebe 12' ein Mittelstück 13' auf, das als Münzpfandsystem 35' ausgebildet ist.

Das Münzpfandsystem 35' weist weiter ein Darstellungsfeld 37' auf, in dem Werbung eingeklipst werden kann.

Die Endstücke 14' mit der Greifeinheitaufnahme 22' und dem Greifeinheiteinsatz 24' sind identisch ausgebildet, wie bei dem in Fig. 1 und Fig. 2 gezeigten Ausführungsbeispiel.

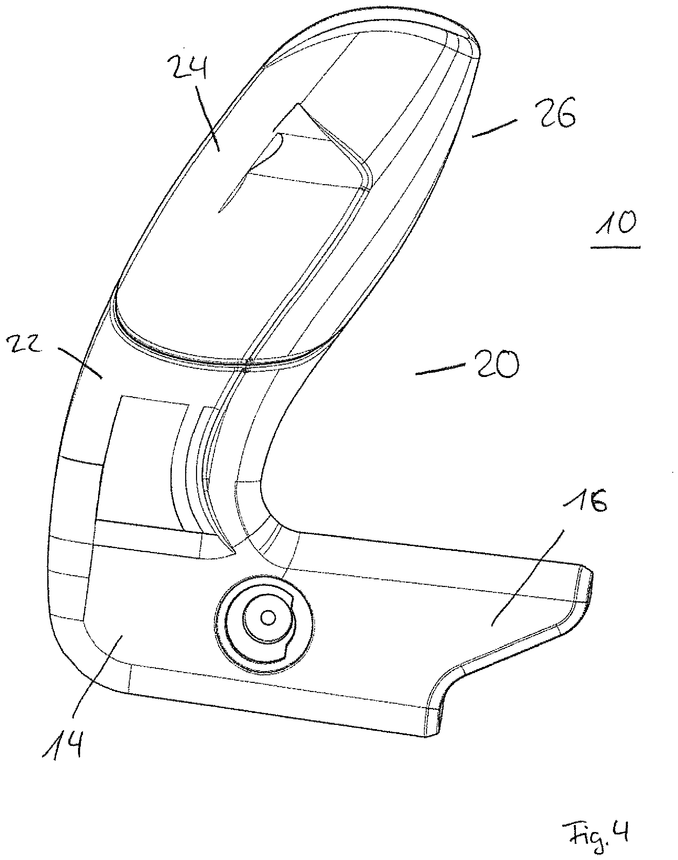

Fig. 4 zeigt eine perspektivische Ansicht auf eine montierte erfindungsgemäße Greifeinheit 20.

Hier sind die Greifeinheitaufnahme 22 und der Greifeinheiteinsatz 24 bereits formschlüssig ineinandergesteckt und montiert.

Die Greifeinheitaufnahme 22 und der Greifeinheiteinsatz 24 sind insbesondere mittels wenigstens einer Nut-Feder-Verbindung 28 miteinander im montierten Zustand verbunden.

Auch das Endstück 14 ist gezeigt.

Fig. 5 zeigt eine Explosionsdarstellung der Greifeinheit 20 gemäß Fig. 4.

Darin ist eine Wandung 48 der Greifeinheitaufnahme 22 dargestellt.

Die Wandung 48 ist als hülsenartiger Ansatz an die Greifeinheitaufnahme 22 angeformt und bildet einen Endbereich der Greifeinheitaufnahme 22 aus.

In einer Innenoberfläche der Wandung 48 sind längliche, umfänglich angeordnete Führungsnuten eingebracht.

Diese Führungsnuten erstrecken sich von einem im montierten Zustand dem Greifeinheiteinsatz 24 zugewandten Ende der Wandung 48 bis zu einem Grund der Greifeinheitaufnahme 22.

Die Greifeinheitaufnahme 22 ist wenigstens abschnittsweise hohl ausgebildet

Im montierten Zustand greifen in diese Führungsnuten ihren Abmessungen entsprechende längliche Führungsstreifen ein, die auf einer Außenoberfläche einer innenliegenden Wandung 52 des Greifeinheiteinsatzes 24 angeformt sind.

Die innenliegende Wandung 52 des Greifeinheiteinsatzes 24 ist als innerer hülsenartiger Ansatz ausgebildet und im Grund in einem Bereich der Spitze des Greifeinheiteinsatzes 24 angeformt.

Ferner ragt die innenliegende Wandung 52 über ein im montierten Zustand der Greifeinheitaufnahme 22 zugewandtes Ende einer außenliegenden Wandung 54 des Greifeinheiteinsatzes 24 hinaus.

Ferner zeigt Fig. 5, dass zwei Nuten 42, 44 der Nut-Feder-Verbindung 28 in einer Oberfläche 38 der Greifeinheitaufnahme 22 eingebracht sind.

Die Oberfläche 38 der Greifeinheitaufnahme 22 ist gemäß Fig. 5 als Außenoberfläche dieser Wandung 48 ausgebildet.

Die Nuten 42, 44 sind ferner darin ringförmig ausgebildet.

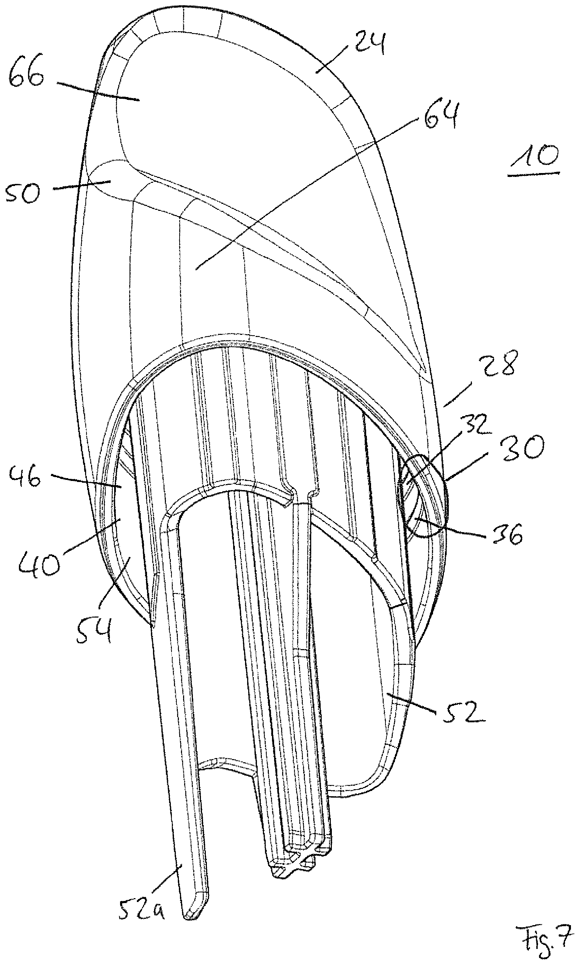

In diesem Fall, ist die Oberfläche 40 als Innenoberfläche der außenliegenden Wandung 54 des Greifeinheiteinsatzes 24 ausgebildet (vgl. Fig. 7).

Fig. 6 zeigt eine isolierte Ansicht der Greifeinheitaufnahme 22 der Greifeinheit 20 gemäß Fig. 4.

Die Greifeinheitaufnahme 22 ist kelchartig ausgebildet.

Im gezeigten Ausführungsbeispiel ist der Greifeinheiteinsatz 24 (vgl. Fig. 5) kelchartig ausgebildet.

Zu sehen ist in Fig. 6 eine Draufsicht auf den Grund bzw. das Innere der Befestigungseinrichtung 16, die eine hohle Aufnahme aufweist, die zum Aufsatz auf eine Befestigungsstelle am Transportwagen 34 vorgesehen ist.

Außerdem ist ein Ansatz 60 zum Einschub in den jeweiligen Griffabschnitt 18 zu sehen.

Der Ansatz 60 weist zur Verrastung im Griffabschnitt 18 eine federbelastete Verrastungsnase 62 auf.

Die Verrastungsnase 62 greift im montierten Zustand in eine entsprechende Verrastungsausnehmung des Griffabschnitts ein (nicht näher gezeigt).

Fig. 7 zeigt eine isolierte Ansicht des Greifeinheiteinsatzes 24 der Greifeinheit 20 gemäß Fig. 4.

Die im montierten Zustand außenliegende Oberfläche 64 des Greifeinheiteinsatzes 24 der Greifeinheit 20 ist ergonomisch gestaltet und weist insbesondere im Bereich der Spitze des Greifeinheiteinsatzes 24 eine Mulde 66 auf.

Die Mulde 66 ist optional und hier in der gezeigten Ausführungsform realisiert. Andere Ausführungsformen müssen diese Mulde 66 nicht realisieren.

In diese Mulde 66 kann der Nutzer des Transportwagens 34 z.B. seinen Daumen einlegen.

Ferner ist der Greifeinheiteinsatz 24 zumindest abschnittsweise doppelwandig ausgebildet.

Der Greifeinheiteinsatz 24 bildet auf diese Weise mit seiner doppelwandigen Ausbildung einen offenen Ringspalt 46 aus.

Der Ringspalt 46 ist einseitig offen und erstreckt sich von einem Grund eines geschlossenen Bereichs der Spitze des Greifeinheiteinsatzes 24 in Richtung zu einem der Greifeinheitaufnahme 22 im montierten Zustand zugewandten Endes des Greifeinheiteinsatzes 24.

Der Ringspalt 46 ist zudem durch eine innenliegende Wandung 52 und eine außenliegende Wandung 54 begrenzt.

Die innenliegende Wandung 52 ist gemessen vom Grund des Ringspalts 46 länger im Vergleich zur außenliegenden Wandung 54.

Die innenliegende Wandung 52 und die außenliegende Wandung 54 münden in dem geschlossenen Bereich der Spitze des Greifeinheiteinsatzes 24 in eine gemeinsame Wandung 50 und bilden so den Grund des Greifeinheiteinsatzes 24 aus.

Die innenliegende Wandung 52 und die außenliegende Wandung 54 können ebenfalls kelchartig ausgebildet sein.

Die innenliegende Wandung 52 weist ferner einen Fortsatz 52a auf.

Der Fortsatz 52a ist nasenartig ausgebildet und ein einstückiger Fortsatz der Wandung 52.

Dieser dient zur Führung des Greifeinheiteinsatzes 24 bezüglich der Greifeinheitaufnahme 22 während der Montage sowie zu deren gegenseitiger formschlüssiger Abstützung und Fixierung im montierten Zustand.

Alternativ kann vorgesehen sein, dass die Greifeinheitaufnahme 22 zumindest abschnittsweise doppelwandig ausgebildet ist.

Zusätzlich ist es ebenfalls denkbar, dass die Greifeinheitaufnahme 22 mit ihrer doppelwandigen Ausbildung einen offenen Ringspalt ausbildet.

Die beiden in Fig. 7 dargestellten Federn 30 der Nut-Feder-Verbindung 28 sind durch einen Wulst 32, 36 aus einer Oberfläche 40 des Greifeinheiteinsatzes 24 ausgebildet. Diese Oberfläche 40 des Greifeinheiteinsatzes 24 ist gemäß Fig. 7 als Innenoberfläche der außenliegenden Wandung 54 des Greifeinheiteinsatzes 24 ausgebildet.

Die beiden in Fig. 7 gezeigten Federn 30 sind ringförmig ausgebildet.

Zudem ist es vorstellbar, dass die beiden in Fig. 7 dargestellten Federn 30 der Nut-Feder-Verbindung 28 durch einen Wulst 32 oder eine Erhebung 36 aus einer Oberfläche 38 der Greifeinheitaufnahme 22 ausgebildet sind.

In diesem Fall ist die Oberfläche 38 ebenfalls als Außenoberfläche der Wandung 48 der Greifeinheitaufnahme 22 ausgebildet (siehe Fig. 5).

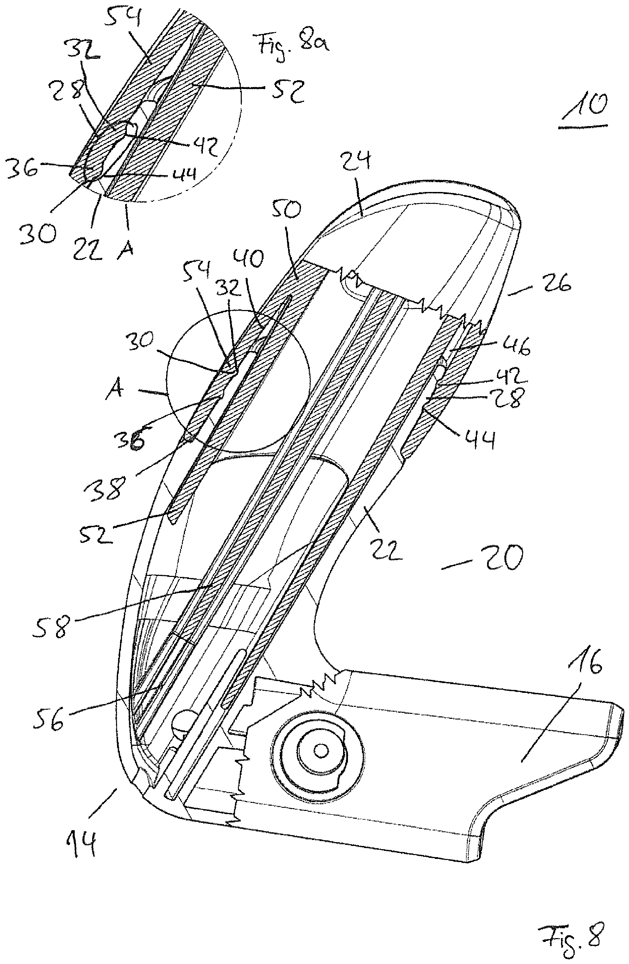

Fig. 8 zeigt eine Schnittdarstellung der Greifeinheit 20 gemäß Fig. 4, anhand derer insbesondere die strukturelle Formschlussverbindung ausgebildet durch die Nut-Feder-Verbindung 28 näher erläutert werden soll.

Dementsprechend zeigt Fig. 8a eine detailliertere Darstellung der Nut-Feder-Verbindung 28 des Details A aus Fig. 8.

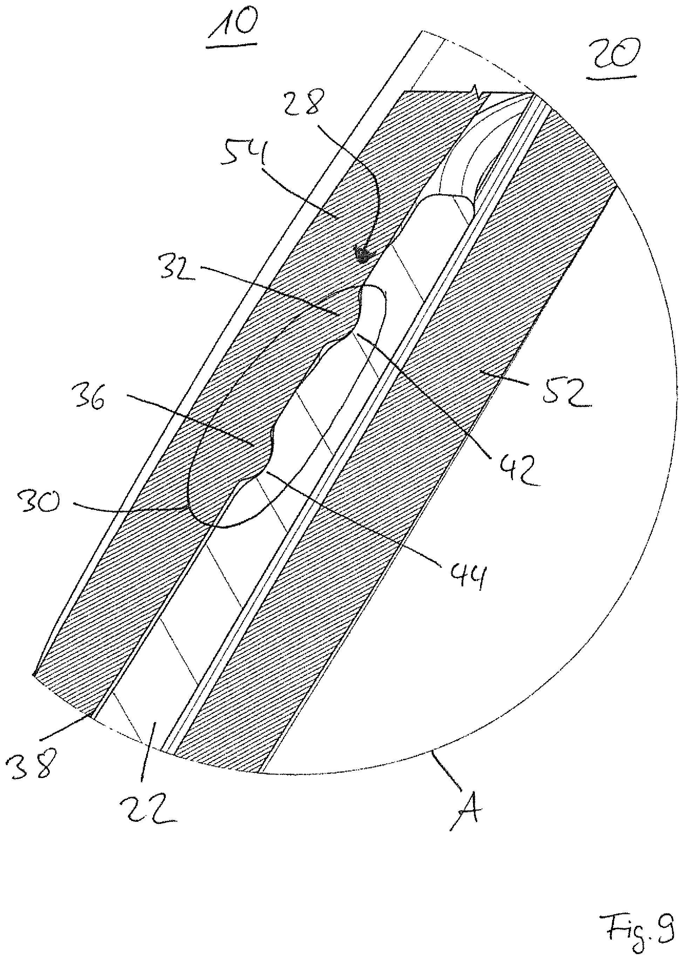

Eine noch detailliertere Detaildarstellung des Details A aus Fig. 8 ist in Fig. 9 gezeigt.

Gemäß Fig. 8 ist der Greifeinheiteinsatz 24 mit seiner doppelwandigen Struktur und dem dadurch ausgebildeten offenen Ringspalt 46 dargestellt.

In diesen Ringspalt 46 ist im montierten Zustand der Greifeinheit 20 eine Wandung 48 der Greifeinheitaufnahme 22 eingesetzt.

Damit umgreift der Greifeinheiteinsatz 24 die Greifeinheitaufnahme 22 im montierten Zustand mittels seiner außenliegenden Wandung 54 umfänglich und abschnittsweise axial.

Durch dieses Einsetzen kann die in Fig. 8 und 8a dargestellte doppelt wirkende Nut-Feder-Verbindung 28 hergestellt werden.

Eine einfache oder mehrfache Nut-Feder-Verbindung 28 ist in diesem Zusammenhang ebenfalls denkbar.

Dazu sind auf der Innenoberfläche 40 der außenliegenden Wandung 54 des Greifeinheiteinsatzes 24 zwei ringförmige Federn 30 in Form eines Wulstes 32 oder einer Erhebung 36 angeformt, welche gemäß Fig. 8, 8a in zwei ringförmige, ihren Abmessungen entsprechende Nuten 42, 44 eingreifen bzw. verrasten.

Die Federn 30 werden in einem Spritzgusswerkzeug zwangsentformt.

Entsprechend sind die beiden ringförmigen Nuten 42, 44 in einer Oberfläche 38 der Greifeinheitaufnahme 22 eingebracht.

Die Nuten 42, 44 werden ebenfalls wenigstens teilweise in einem Spritzgusswerkzeug zwangsentformt.

Die Oberfläche 38 der Greifeinheitaufnahme 22 ist gemäß Fig. 8 als Außenoberfläche der Wandung 48 der Greifeinheitaufnahme 22 ausgebildet (vgl. Fig. 5).

Diese Außenoberfläche der Greifeinheitaufnahme 22 ist wenigstens teilweise in axialer Richtung umfänglich keilförmig ausgebildet, wobei sich der Durchmesser des keilförmigen Abschnitts in Richtung des Grunds der Greifeinheitaufnahme 22 vergrößert.

Die beiden ringförmigen Nuten 42, 44 sind in der Außenoberfläche der Wandung 48 der Greifeinheitaufnahme 22 radial zueinander versetzt eingebracht.

Dadurch erhöht sich ein Hinterschnitt der Außenoberfläche der Wandung 48 der Greifeinheitaufnahme 22.

Ebenso ist die Innenoberfläche 40 der außenliegenden Wandung 54 des Greifeinheiteinsatzes 24 wenigstens teilweise in axialer Richtung umfänglich keilförmig ausgebildet, wobei sich der Durchmesser des keilförmigen Abschnitts in Richtung des Grunds im Bereich der Spitze des Greifeinheiteinsatzes 24 vergrößert.

Weiter sind Federn 30, in Form eines Wulstes 32 oder einer Erhebung 36, auf der Innenoberfläche 40 der außenliegenden Wandung 54 des Greifeinheiteinsatzes 24 radial zueinander versetzt angeformt.

Dadurch erhöht sich ebenfalls der Hinterschnitt der Innenoberfläche 40 der außenliegenden Wandung 54 des Greifeinheiteinsatzes 24.

Ferner kann insbesondere der Fig. 8 entnommen werden, dass die Greifeinheitaufnahme 22 und der Greifeinheiteinsatz 24 jeweils ein Steckelement 56, 58 aufweisen.

Die beiden Steckelemente 56, 58 befinden sich im montierten Zustand der Greifeinheit 20 in ihrem Inneren und greifen ebenfalls ineinander.

Das Steckelement 56 der Greifeinheitaufnahme 22 erstreckt sich parallel zu der Innenoberfläche ihrer Wandung 48.

Das Steckelement 56 der Greifeinheitaufnahme 22 ist im Grund der Greifeinheitaufnahme 22 einstückig angeformt und erhebt sich aus dem Grund und erstreckt sich axial innerhalb der Greifeinheitaufnahme 22.

Das Steckelement 58 des Greifeinheiteinsatzes 24 erstreckt sich parallel zu dessen innenliegender Wandung 52. Das Steckelement 58 des Greifeinheiteinsatzes 24 ist im Grund innerhalb des Bereichs der Spitze des Greifeinheiteinsatzes 24 einstückig angeformt und erhebt sich aus diesem Grund hervor und ragt axial über die außenliegende Wandung 54 des Greifeinheiteinsatzes 24 hinaus.

Ferner ragt das Steckelement 58 des Greifeinheiteinsatzes 24 axial bis in das Steckelement 56 der Greifeinheitaufnahme 22 zu dessen Aufnahme hinein, wodurch die Abstützung zwischen Greifeinheitaufnahme 22 und Greifeinheiteinsatz 24 im montierten Zustand verbessert wird.

Die Steckelemente 56, 58 greifen demnach nach dem Schlüssel-Schloss-Prinzip ineinander.

Das Steckelement 58 des Greifeinheiteinsatzes 24 weist im Übrigen eine wenigstens dreifache Länge verglichen zu dem Steckelement 56 der Greifeinheitaufnahme 22 auf. Dies ist aber nicht zwingend. Die Überdeckung der Steckelemente 58 könnte bis zur Trennfuge 24c gehen oder leicht überstehend ausgeführt sein.

Weiter ist das Steckelement 58 des Greifeinheiteinsatzes 24 doppelkreuzartig bezogen auf seinen Querschnitt ausgebildet.

Außerdem weist das Steckelement 56 der Greifeinheitaufnahme 22 eine dem Querschnitt des Steckelements 58 des Greifeinheiteinsatzes 24 angepasste doppelkreuzartige Aufnahme auf.

Die Funktion der Schiebegriffeinheit 10 mit den erfindungsgemäßen Greifeinheiten 20 lässt sich wie folgt beschreiben:
Durch die Griffabschnitte 18 wird ein Schieben des nicht näher dargestellten Transportwagens dahingehend ermöglicht, dass dieser wie üblich mit horizontal aufgelegten Händen umgriffen und geschoben werden kann.

Durch die Greifeinheiten 20 wird insbesondere bei schwerer Beladung des Transportwagens ein leichteres Schieben und Ziehen des Transportwagens ermöglicht.

Dadurch, dass die Greifeinheiten 20 zweiteilig ausgebildet sind, nämlich durch die Greifeinheitaufnahme 22 und den Greifeinheiteinsatz 24 wird es ermöglicht, Teile der Greifeinheiten 20 bei Beschädigung leichter ersetzen zu können.

Zusätzlich kann aufgrund der vorstehend beschriebenen Formgebung der Nut-Feder-Verbindung 28 innerhalb der Greifeinheitaufnahme 22 und des Greifeinheiteinsatzes 24 eine Montage der Greifeinheit 20 insgesamt erleichtert und ihre unsachgemäße Demontage entsprechend erschwert werden.

Dadurch kann insbesondere einem unsachgemäßen Herausziehen des Greifeinheiteinsatzes 24 aus der Greifeinheitaufnahme 22 wirksam vorgebeugt werden. Somit kann eine stabile und sich selbst stützende Greifeinheit 20 im montierten Zustand erreicht werden.

Darüber hinaus kann die Nut-Feder-Verbindung 28 aufgrund ihrer zuvor beschriebenen Formgebung auf engstem Raum mittels eines Spritzgussverfahrens zwangsentformt hergestellt werden.

Dies erlaubt eine entsprechend kostengünstige Herstellung der geometrischen Formen der Nut-Feder-Verbindung 28.

Zusätzlich kann diese Art der Nut-Feder-Verbindung 28 auch auf weitere Greifeinheiten 20 für unterschiedlichste Anwendungen in Schiebegriffeinheiten 10 adaptiert werden.

Darüber hinaus ist es möglich, eine bessere ergonomische Formgebung der Greifeinheiten 20 zu erreichen.

Außerdem ist es möglich, die Greifeinheiteinsätze 24 erst nach dem Transport zu montieren, wodurch der Transport erleichtert werden kann.

Bei Beschädigungen der Greifeinheiteinsätze 24 können diese dennoch unproblematisch ausgetauscht und ersetzt werden, ohne komplett die gesamte Schiebegriffeinheit 10 demontieren zu müssen.

Sowohl die Greifeinheitaufnahme 22 als auch der Greifeinheiteinsatz 24 bzw. das Endstück 14 können im Spritzgussverfahren hergestellt werden.

Mögliche Materialien sind beispielsweise schlagzähe, spritzgießbare Kunststoffe wie Polypropylen PP.

Die spritzgießbaren Kunststoffe können faserverstärkt oder auch nicht faserverstärkt sein.

### Bezugszeichen

- 10, 10': Schiebegriffeinheit
- 12, 12': Querstrebe
- 13': Mittelstück
- 14, 14': Endstück
- 16: Befestigungseinrichtung
- 18, 18': Griffabschnitt
- 20: Greifeinheit
- 22, 22': Greifeinheitaufnahme
- 24, 24': Greifeinheiteinsatz
- 24c: Trennfuge
- 26: Griffhorn
- 28: Nut-Feder-Verbindung
- 30: Feder
- 32: Wulst
- 34: Transportwagen
- 35': Münzpfandsystem
- 36: Erhebung
- 37': Darstellungsfeld
- 38: Oberfläche der Greifeinheitaufnahme
- 40: Oberfläche des Greifeinheiteinsatzes
- 42, 44: Nut
- 46: Offener Ringspalt
- 48: Wandung der Greifeinheitaufnahme
- 50: Wandung des Greifeinheiteinsatzes
- 52: innenliegende Wandung
- 52a: Fortsatz der innenliegenden Wandung
- 54: außenliegende Wandung
- 56: Steckelement der Greifeinheitaufnahme
- 58: Steckelement des Greifeinheiteinsatzes
- 60: Ansatz zum Einschub in den Griffabschnitt
- 62: Verrastungsnase
- 64: Außenliegende Oberfläche des Greifeinheiteinsatzes
- 66: Mulde des Greifeinheiteinsatzes

## Patentansprüche

1. Greifeinheit (20) für eine Schiebegriffeinheit (10) eines von Hand beweglichen Transportwagens (34), wobei die Greifeinheit (20) jeweils wenigstens aus einer Greifeinheitaufnahme (22) und einem Greifeinheiteinsatz (24) besteht, die gemeinsam im montierten Zustand ein freistehend aufragendes Griffhorn (26) für die Schiebegriffeinheit (10) ausbilden, und wobei jeweils an eine Greifeinheitaufnahme (22) eine Befestigungseinrichtung (16) angeformt ist, die zur Befestigung an dem Transportwagen (34) dient, wobei die Greifeinheitaufnahme (22) und der Greifeinheiteinsatz (24) mittels wenigstens einer Nut-Feder-Verbindung (28) miteinander im montierten Zustand verbunden sind, **dadurch gekennzeichnet, dass** die Greifeinheitaufnahme (22) und/oder der Greifeinheiteinsatz (24) zumindest abschnittsweise doppelwandig ausgebildet ist,
und dass die Greifeinheitaufnahme (22) und/oder der Greifeinheiteinsatz (24) mit ihrer/seiner doppelwandigen Ausbildung einen offenen Ringspalt (46) ausbildet, in den im montierten Zustand eine Wandung (48, 50) der Greifeinheitaufnahme (22) oder des Greifeinheiteinsatzes (24) eingesetzt ist,
und dass der Ringspalt (46) durch eine innenliegende Wandung (52) und eine außenliegende Wandung (54) begrenzt ist, wobei die innenliegende Wandung (52) gemessen vom Grund des Ringspaltes (46) länger ist im Vergleich zur außenliegenden Wandung (54).

2. Greifeinheit (20) nach Anspruch 1, **dadurch gekennzeichnet, dass** wenigstens eine Feder (30) der Nut-Feder-Verbindung (28) durch einen Wulst (32) und/oder eine Erhebung (36) aus einer Oberfläche (38, 40) der Greifeinheitaufnahme (22) und/oder des Greifeinheiteinsatzes (24) ausgebildet ist.

3. Greifeinheit (20) nach Anspruch 1 oder Anspruch 2, **dadurch gekennzeichnet, dass** wenigstens eine Nut (42) der Nut-Feder-Verbindung (28) durch eine Vertiefung und/oder eine Nut (44) in der Oberfläche (38, 40) der Greifeinheitaufnahme (22) und/oder des Greifeinheiteinsatzes (24) ausgebildet ist.

4. Greifeinheit (20) nach Anspruch 2 oder Anspruch 3, **dadurch gekennzeichnet, dass** die Feder (30) und/oder die Nut (42) im Wesentlichen ringförmig ausgebildet ist.

5. Greifeinheit (20) nach einem der vorhergehenden Ansprüche, **dadurch gekennzeichnet, dass** die Greifeinheitaufnahme (22) und/oder der Greifeinheiteinsatz (24) im Wesentlichen kelchartig ausgebildet ist.

6. Greifeinheit (20) nach einem der vorhergehenden Ansprüche, **dadurch gekennzeichnet, dass** die Greifeinheitaufnahme (22) und der Greifeinheiteinsatz (24) jeweils ein Steckelement (56, 58) aufweisen, die im montierten Zustand der Greifeinheit (20) im Inneren der Greifeinheit (20) befindlich sind und ineinandergreifen.

7. Greifeinheit (20) nach Anspruch 6, **dadurch gekennzeichnet, dass** die Steckelemente (56, 58) nach dem Schlüssel-Schloss-Prinzip ineinandergreifen.

8. Greifeinheit (20) nach Anspruch 6 oder Anspruch 7, **dadurch gekennzeichnet, dass** eines der Steckelemente (56, 58) kreuzartig bezogen auf seinen Querschnitt, insbesondere doppelkreuzartig bezogen auf seinen Querschnitt, ausgebildet ist und/oder dass eines der Steckelemente (56, 58) mit einem knicksteifen Querschnitt ausgebildet ist.

9. Greifeinheit (20) nach einem der vorhergehenden Ansprüche, **dadurch gekennzeichnet, dass** die Nut-Feder-Verbindung (28) mehrere Nuten mit unterschiedlicher Tiefe aufweist.

10. Transportwagen mit einer Greifeinheit (20) nach einem der vorhergehenden Ansprüche 1 bis 9.

## Claims

1. A gripping unit (20) for a push handle unit (10) of a manually movable trolley (34), wherein the gripping unit (20) is in each case composed at least of a gripping unit receiver (22) and a gripping unit insert (24), which in the mounted state together form a handle horn (26), projecting up in a self-supporting manner, for the push handle unit (10), and wherein in ease case a securing device (16) is formed on a gripping unit receiver (22) and is used for securing to the trolley (34), wherein the gripping unit receiver (22) and the gripping unit insert (24) are connected to one another in the mounted state by means of at least one tongue and groove connection (28), **characterized in that** at least portions of the gripping unit receiver (22) and/or the gripping unit insert (24) are double-walled and **in that** the gripping unit receiver (22) and/or the gripping unit insert (24) form/forms an open annular gap (46) with their/its double-walled design, into which annular gap there is inserted a wall (48, 50) of the gripping unit receiver (22) or of the gripping unit insert (24) in the mounted state, and **in that** the annular gap (46) is bounded by an internal wall (52) and an external wall (54), wherein, measured from the bottom of the annular gap (46), the internal wall (52) is longer in comparison to the external wall (54).

2. A gripping unit (20) according to claim 1, **characterized in that** at least one tongue (30) of the tongue and groove connection (28) is formed by a swelling (32) and/or a protrusion (36) from a surface (38, 40) of the gripping unit receiver (22) and/or the gripping unit insert (24).

3. A gripping unit (20) according to claim 1 or claim 2, **characterized in that** at least one groove (42) of the tongue and groove connection (28) is formed by a depression and/or a groove (44) in the surface (38, 40) of the gripping unit receiver (22) and/or the gripping unit insert (24).

4. A gripping unit (20) according to claim 2 or claim 3, **characterized in that** the tongue (30) and/or the groove (42) is/are substantially annular.

5. A gripping unit (20) according to any one of the preceding claims, **characterized in that** the gripping unit receiver (22) and/or the gripping unit insert (24) is/are substantially goblet-like.

6. A gripping unit (20) according to any one of the preceding claims, **characterized in that** the gripping unit receiver (22) and the gripping unit insert (24) each have a plug-in element (56, 58) which in the mounted state of the gripping unit (20) are located inside the gripping unit (20) and engage one another.

7. A gripping unit (20) according to claim 6, **characterized in that** the plug-in elements (56, 58) engage one another according to the key and lock principle.

8. A gripping unit (20) according to claim 6 or claim 7, **characterized in that** one of the plug-in elements (56, 58) is cross-like related to its cross-section, in particular double-cross-like related to its cross-section and/or **in that** one of the plug-in elements (56, 58) has a buckle-proof cross-section.

9. A gripping unit (20) according to any one of the preceding claims, **characterized in that** the tongue and groove connection (28) has a plurality of grooves of differing depth.

10. A trolley having a gripping unit (20) according to any one of the preceding claims 1 to 9.

## Revendications

1. Unité de préhension (20) conçue pour un ensemble unitaire (10) à barre de poussée d'un chariot de transport (34) mobile manuellement, ladite unité de préhension (20) étant constituée, à chaque fois, au moins d'un logement (22) et d'une pièce intégrée (24) donnant conjointement naissance, à l'état monté, à une crosse de poignée (26) qui fait librement saillie en porte-à-faux et est destinée audit ensemble unitaire (10) à barre de poussée, sachant qu'un dispositif de fixation (16), faisant respectivement corps avec un logement (22) de ladite unité de préhension, sert à la fixation audit chariot de transport (34), le logement (22) de l'unité de préhension et la pièce intégrée (24) de ladite unité de préhension étant reliés mutuellement, à l'état monté, à l'aide d'au moins une liaison (28) par rainure et languette, **caractérisée par le fait que** le logement (22) de l'unité de préhension et/ou la pièce intégrée (24) de ladite unité de préhension présente(nt), au moins par zones, une réalisation à double paroi ;
**par le fait que** ledit logement (22) de l'unité de préhension et/ou ladite pièce intégrée (24) de l'unité de préhension donne(nt) naissance, par sa (leur) réalisation à double paroi, à un interstice annulaire ouvert (46) dans lequel une paroi (48, 50) dudit logement (22) de l'unité de préhension, ou de ladite pièce intégrée (24) de l'unité de préhension, est insérée à l'état monté ;
et **par le fait que** ledit interstice annulaire (46) est délimité par un cloisonnement intérieur (52) et par un cloisonnement extérieur (54), lequel cloisonnement intérieur (52) est plus long, mesuré à partir du fond dudit interstice annulaire (46), comparativement audit cloisonnement extérieur (54).

2. Unité de préhension (20) selon la revendication 1, **caractérisée par le fait qu'**au moins une languette (30) de la liaison (28) par rainure et languette revêt la forme d'un bourrelet (32) et/ou d'une protubérance (36) dépassant d'une surface (38, 40) du logement (22) de l'unité de préhension, et/ou de la pièce intégrée (24) de ladite unité de préhension.

3. Unité de préhension (20) selon la revendication 1 ou la revendication 2, **caractérisée par le fait qu'**au moins une rainure (42) de la liaison (28) par rainure et languette revêt la forme d'une creusure et/ou d'une saignée (44) pratiquée(s) dans la surface (38, 40) du logement (22) de l'unité de préhension, et/ou de la pièce intégrée (24) de ladite unité de préhension.

4. Unité de préhension (20) selon la revendication 2 ou la revendication 3, **caractérisée par le fait que** la languette (30) et/ou la rainure (42) est (sont), pour l'essentiel, de réalisation annulaire.

5. Unité de préhension (20) selon l'une des revendications précédentes, **caractérisée par le fait que** le logement (22) de ladite unité de préhension et/ou la pièce intégrée (24) de ladite unité de préhension est (sont), pour l'essentiel, de réalisation du type calice.

6. Unité de préhension (20) selon l'une des revendications précédentes, **caractérisée par le fait que** le logement (22) de ladite unité de préhension et la pièce intégrée (24) de ladite unité de préhension sont respectivement munis d'éléments enfichables (56, 58) qui, à l'état monté de l'unité de préhension (20), sont situés dans l'espace interne de ladite unité de préhension (20) et s'interpénètrent.

7. Unité de préhension (20) selon la revendication 6, **caractérisée par le fait que** les éléments enfichables (56, 58) s'interpénètrent suivant le principe clé-serrure.

8. Unité de préhension (20) selon la revendication 6 ou la revendication 7, **caractérisée par le fait que** la section transversale de l'un des éléments enfichables (56, 58) présente une réalisation de type cruciforme, en particulier de type cruciforme double ; et/ou **par le fait que** l'un desdits éléments enfichables (56, 58) est pourvu d'une section transversale rigide à la flexion.

9. Unité de préhension (20) selon l'une des revendications précédentes, **caractérisée par le fait que** la liaison (28) par rainure et languette comprend plusieurs rainures de profondeurs différentes.

10. Chariot de transport équipé d'une unité de préhension (20) conforme à l'une des revendications 1 à 9 précédentes.
